# FASCICULE DE BREVET EUROPEEN

(11) **EP 3 511 182 B1**
(45) Date de publication et mention de la délivrance du brevet: **30.06.2021**
(21) Numéro de dépôt: 19150359.8
(22) Date de dépôt: 04.01.2019
(51) Int. Cl.: B60H 1/00

(54) **SYSTÈME DE CONDITIONNEMENT D'AIR À VANNES CINQ VOIES, MODULE ET PROCÉDÉ CORRESPONDANT**
KLIMAANLAGENSYSTEM MIT FÜNFWEGEVENTILEN, MODUL UND ENTSPRECHENDES VERFAHREN
AIR-CONDITIONING SYSTEM WITH FIVE-CHANNEL VALVES, MODULE AND CORRESPONDING METHOD

(30) Priorité: 12.01.2018 FR 1850251
(43) Date de publication de la demande: 17.07.2019
(73) Titulaire: Valeo Systèmes Thermiques, 78320 Le Mesnil-Saint-Denis (FR)
(72) Inventeur: YAHIA, Mohamed, 78322 LE MESNIL SAINT-DENIS CEDEX (FR); NICOLAS, Bertrand, 78322 LE MESNIL SAINT-DENIS CEDEX (FR)
(74) Mandataire: Tran, Chi-Hai

(56) Documents cités:
- EP-A1- 2 796 308
- WO-A1-2012/120843
- DE-A1- 19 747 316
- DE-A1-102011 100 301
- JP-A- H1 137 322
- JP-A- S6 148 675
- JP-A- H03 255 864

## Description

### 1. Domaine de l'invention

Le domaine de l'invention est celui des systèmes et procédés de conditionnement d'air pouvant notamment être mis en œuvre afin d'assurer le conditionnement de l'air à l'intérieur de l'habitacle d'un véhicule automobile, par exemple la ventilation, le chauffage et/ou la climatisation de celui-ci.

### 2. Art antérieur

Des systèmes de ventilation, chauffage et/ou climatisation sont couramment mis en œuvre au sein de véhicules automobiles afin de conditionner l'air se trouvant dans leurs habitacles. De tels systèmes sont généralement dénommés systèmes HVAC.

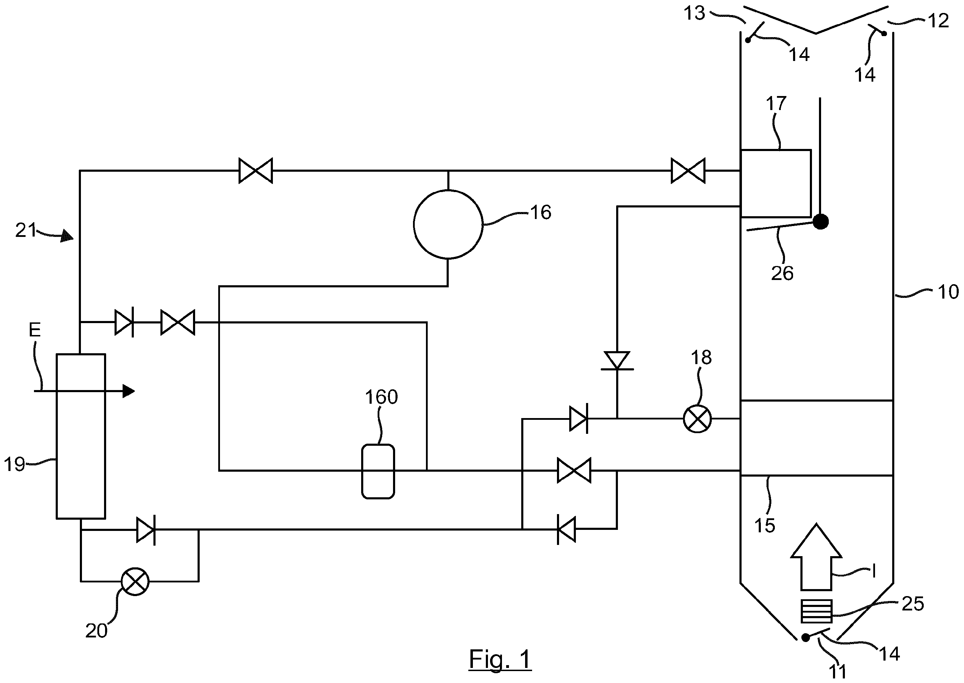

Les documents WO 2012/120843 A1 et JP H03 255864 A divulguent de tels systèmes HVAC d'un type connu. Ainsi que cela est représenté à la figure 1, un tel système comprend classiquement un compartiment 10 présentant une entrée d'air 11 et une ou plusieurs sorties d'air 12, 13 vers l'habitacle munies de volets d'obturation 14.

Le compartiment 10 loge un évaporateur 15, un échangeur de chaleur 17 et un ventilateur 25 pour générer la circulation d'un flux d'air I à l'intérieur de celui-ci. Un volet 26 permet de shunter l'échangeur de chaleur 17. L'échangeur de chaleur 17 est monté en aval du évaporateur 15 selon le sens de circulation d'air I.

L'évaporateur 15 et l'échangeur de chaleur 17 sont reliés à un circuit de circulation 21 d'un fluide caloporteur le long duquel sont implantés un compresseur 16, un accumulateur 160, un évapo-condenseur 19, ainsi qu'une pluralité de vannes et de valves unidirectionnelles ou non au rang desquelles figures notamment les vannes 18 et 20 qui peuvent assurer dans certains cas la fonction de détendeur.

Les vannes et valves peuvent être commandées de sorte à faire fonctionner le système selon plusieurs modes, à savoir notamment les modes suivants :
- un mode air conditionné dans lequel le fluide caloporteur est vaporisé à l'intérieur de l'évaporateur 15 pour refroidir l'air circulant dans le compartiment 10 avant de passer à travers l'accumulateur 160 (agissant comme un séparateur de phase) puis d'être comprimé par le compresseur 16 puis refroidi par l'air ambiant E à l'intérieur de l'évapo-condenseur 19 dans lequel il se condense avant d'être détendu par la vanne 18 puis réintroduit dans l'évaporateur 15 pour un nouveau cycle.
- Un mode air conditionné et déshumidification dans lequel le fluide caloporteur est vaporisé à l'intérieur de l'évaporateur 15 pour refroidir l'air circulant dans le compartiment 10 avant de passer à travers l'accumulateur 160 (agissant comme un séparateur de phase) puis d'être comprimé par le compresseur 16. Il est ensuite en partie refroidi par l'air ambiant E à l'intérieur de l'évapo-condenseur 19 dans lequel il se condense, et en partie condensé dans l'échangeur 17 pour réchauffer l'air circulant dans le compartiment. Le fluide caloporteur provenant des échangeurs 19 et 17 est ensuite détendu par la vanne 18 puis réintroduit dans l'évaporateur 15 pour un nouveau cycle.
- Un mode chauffage dans lequel le fluide caloporteur est réchauffé par l'air ambiant E à l'intérieur de l'évapo-condenseur 19 dans lequel il se vaporise avant de passer à travers l'accumulateur 160 (agissant comme un séparateur de phase) puis d'être comprimé dans le compresseur 16 puis condensé dans l'échangeur de chaleur 17 en réchauffant l'air I circulant dans le compartiment 10 avant de passer dans l'évaporateur 15 dans lequel il se condense pour assurer un préchauffage de l'air I avant d'être détendu par la vanne 20 puis de nouveau introduit dans l'évapo-condenseur 19 pour un nouveau cycle.
- Un mode chauffage et déshumidification dans lequel le fluide caloporteur est vaporisé dans l'évaporateur 15 pour permettre d'abaisser de manière importante la température de l'air I circulant dans le compartiment 11 de sorte à condenser en partie l'eau qu'elle contient pour la déshumidifier. Le fluide caloporteur passe ensuite dans l'évapo-condenseur 19 dans lequel il continu éventuellement de se vaporiser avant de passer à travers l'accumulateur 160 (agissant comme un séparateur de phase) puis d'être comprimé dans le compresseur 16 avant de passer dans l'échangeur de chaleur 17 dans lequel il se condense pour réchauffer l'air I circulant dans le compartiment 10 avant d'être détendu dans la vanne 18 puis réintroduit dans l'évaporateur 15 pour un nouveau cycle.
- Un mode récupération dans lequel le fluide caloporteur est vaporisé dans l'évaporateur 15 pour permettre d'abaisser de manière importante la température de l'air I circulant dans le compartiment 11 de sorte à condenser en partie l'eau qu'elle contient pour la déshumidifier. Le fluide caloporteur passe ensuite à travers l'accumulateur 160 (agissant comme un séparateur de phase) puis est comprimé dans le compresseur 16 avant de passer dans l'échangeur de chaleur 17 dans lequel il se condense pour réchauffer l'air I circulant dans le compartiment 10 avant d'être détendu dans la vanne 18 puis réintroduit dans l'évaporateur 15 pour un nouveau cycle.

Un tel système permet d'assurer de manière assez efficace les fonctions de climatisation, chauffage, déshumidification et récupération afin de conditionner l'air d'un habitable de véhicule automobile.

Toutefois l'architecture d'un tel système est assez complexe dans la mesure où il met en œuvre un nombre important de composants, notamment de vannes et valves pour offrir une grande polyvalence en terme de fonctions (modes de fonctionnement).

Il existe donc un besoin de simplifier l'architecture des systèmes de conditionnement de l'air d'un habitacle de véhicule automobile.

### 3. Objectifs de l'invention

L'invention a notamment pour objectif d'apporter une solution efficace à au moins certains de ces différents problèmes.

En particulier, selon au moins un mode de réalisation, un objectif de l'invention est de fournir un système de conditionnement de l'air d'un habitacle de véhicule automobile qui présente une architecture simple.

Un autre objectif de l'invention est, selon au moins un mode de réalisation, de fournir un tel système qui soit polyvalent, c'est-à-dire qui puisse remplir plusieurs fonctions (i.e. fonctionner selon plusieurs modes).

Un autre objectif de l'invention est de procurer un tel système qui soit robuste, et/ou économique et/ou fiable.

### 4. Présentation de l'invention

Ces objectifs, ainsi que d'autres qui apparaîtront par la suite, sont atteints par l'invention qui propose un système de conditionnement d'air dans un compartiment d'un véhicule, ledit système comprenant au moins :
- un premier échangeur de chaleur situé à l'extérieur dudit compartiment ;
- un deuxième échangeur de chaleur situé à l'intérieur dudit compartiment et apte à prélever ou transférer des calories à l'air circulant dans ledit compartiment ;
- au moins un troisième échangeur de chaleur apte à transférer des calories à l'air circulant dans ledit compartiment ;
- un compresseur ;
- un circuit de circulation d'un fluide caloporteur.

Selon l'invention, ledit circuit comprend une vanne cinq voies configurée pour permettre de mettre en relation :
- l'entrée dudit compresseur avec la sortie dudit deuxième échangeur de chaleur ;
- l'entrée dudit compresseur avec la sortie dudit premier échangeur de chaleur ;
- la sortie dudit compresseur avec l'entrée dudit premier échangeur de chaleur ;
- la sortie dudit compresseur avec l'entrée dudit deuxième échangeur de chaleur ;
ledit au moins un troisième échangeur de chaleur étant interposé entre ladite vanne cinq voies et la sortie dudit compresseur et/ou entre ladite vanne cinq voies et l'entrée dudit deuxième échangeur de chaleur.

La mise en œuvre d'une telle vanne cinq voies permet de procurer une architecture de système de conditionnement d'air simple permettant d'assurer un nombre important de modes de fonctionnement.

Selon une variante possible, ladite vanne cinq voies comprend deux vannes trois voies interconnectées.

Selon une variante possible, l'une desdites vannes trois voies est convergente depuis la sortie dudit deuxième échangeur de chaleur et la sortie dudit premier échangeur de chaleur en direction de l'entrée dudit compresseur, l'autre vanne trois voies étant divergente depuis la sortie dudit compresseur vers l'entrée dudit premier échangeur de chaleur et l'entrée dudit deuxième échangeur de chaleur, les voies des vannes divergente et convergente reliées audit premier échangeur de chaleur étant interconnectées.

Selon une variante possible, ladite vanne cinq voies est à débit contrôlé de type tout ou rien ou de type variable.

Selon une variante possible, ladite vanne cinq voies se trouve dans un premier état mettant seulement en relation :
- la sortie dudit deuxième échangeur avec l'entrée dudit compresseur ;
- la sortie dudit compresseur avec l'entrée dudit premier échangeur de chaleur, ledit au moins un troisième échangeur de chaleur étant interposé ou non entre ladite vanne cinq voies et la sortie dudit compresseur.

Selon une variante possible, ladite vanne cinq voies se trouve dans un deuxième état mettant seulement en relation :
- la sortie dudit premier échangeur avec l'entrée dudit compresseur ;
- la sortie dudit compresseur avec l'entrée dudit deuxième échangeur de chaleur, ledit au moins un troisième échangeur de chaleur étant interposé ou non entre ladite vanne cinq voies et la sortie dudit compresseur et/ou entre ladite vanne cinq voies et l'entrée dudit deuxième échangeur de chaleur.

Selon une variante possible, ladite vanne cinq voies se trouve dans un troisième état mettant seulement en relation la sortie dudit compresseur avec l'entrée dudit deuxième échangeur de chaleur, ledit au moins un troisième échangeur de chaleur étant interposé ou non entre ladite vanne cinq voies et la sortie dudit compresseur et/ou entre ladite vanne cinq voies et l'entrée dudit deuxième échangeur de chaleur.

Selon une variante possible, ladite vanne cinq voies se trouve dans un quatrième état mettant seulement en relation :
- la sortie dudit deuxième échangeur avec l'entrée dudit compresseur ;
- la sortie dudit compresseur avec l'entrée dudit deuxième échangeur de chaleur, ledit au moins un troisième échangeur de chaleur étant interposé ou non entre ladite vanne cinq voies et la sortie dudit compresseur et/ou entre ladite vanne cinq voies et l'entrée dudit deuxième échangeur de chaleur.

Selon une variante possible, ladite vanne cinq voies se trouve dans un cinquième état mettant seulement en relation la sortie dudit compresseur avec l'entrée dudit premier échangeur de chaleur, ledit au moins un troisième échangeur de chaleur étant interposé ou non entre ladite vanne cinq voies et la sortie dudit compresseur.

L'invention couvre également une vanne cinq voies comprenant une première et une deuxième voies pouvant être mises en relation fluidique simultanément ou non avec une troisième voie, et une quatrième voie pouvant être mise en relation fluidique simultanément ou non avec une cinquième voie et avec la première voie.

Selon une variante possible, laquelle la première et la deuxième voies sont convergentes vers la troisième voie, et la quatrième voie est divergente vers la cinquième voie et vers la première voie.

### 5. Liste des figures

D'autres caractéristiques et avantages de l'invention apparaîtront à la lecture de la description suivante de modes de réalisation particuliers, donnée à titre de simple exemple illustratif et non limitatif, et des dessins annexés parmi lesquels :
- la figure 1 illustre un système de conditionnement de l'air d'un compartiment de véhicule automobile selon l'art antérieur ;
- la figure 2 illustre un système de conditionnement de l'air d'un compartiment de véhicule automobile selon l'invention ;
- les figures 3 et 4 illustrent deux variantes du système de la figure 2 ;
- la figure 5 illustre le système de la figure 2 fonctionnant en mode air conditionné ;
- la figure 6 illustre le système de la figure 2 fonctionnant en mode air conditionné et déshumidification à faible puissance ;
- la figure 7 illustre le système de la figure 2 fonctionnant en mode air conditionné et déshumidification à forte puissance ;
- la figure 8 illustre le système de la figure 2 fonctionnant en mode chauffage ;
- la figure 9 illustre le système de la figure 2 fonctionnant en mode récupération ;
- la figure 10 illustre un exemple d'intégration du système de la figure 2 au sein d'un système plus complexe ;
- la figure 11 illustre le système de la figure 12 fonctionnant en mode chauffage et récupération de chaleur dans la chaîne de transmission ;
- la figure 12 illustre le système de la figure 12 fonctionnant dans un mode dégivrage à l'arrêt ;
- les figures 13a et 13b illustrent l'association de deux vannes trois voies pour former une vanne cinq voies.

### 6.1. Architecture

### 6.1.1. Structure générale

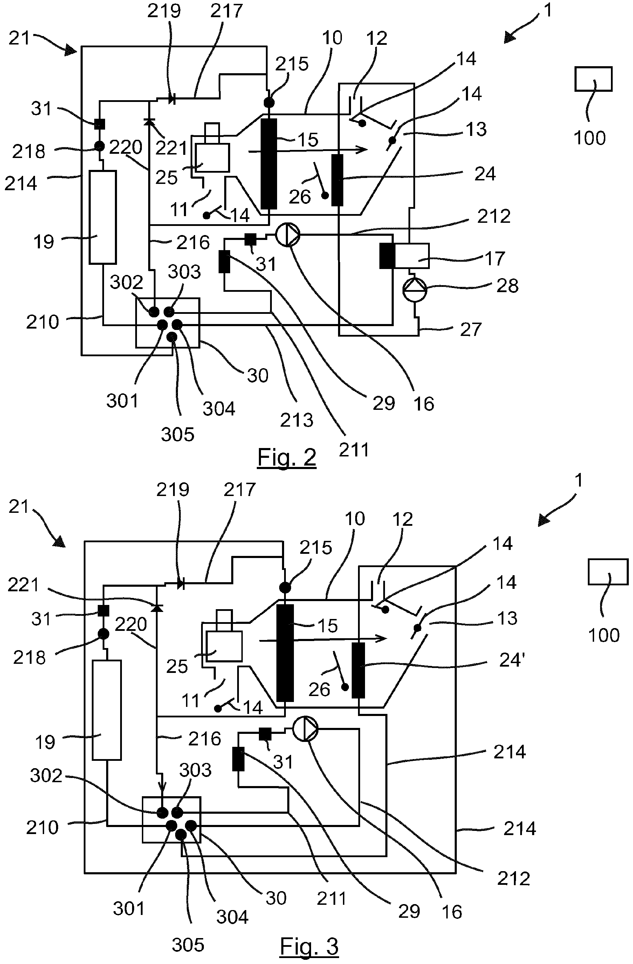

On présente, en relation avec la figure 2, un exemple de mode de réalisation d'un système de conditionnement d'air selon l'invention.

Ainsi que cela est représenté à la figure 2, un tel système 1 comprend classiquement un compartiment 10 présentant une entrée d'air 11 et une ou plusieurs sorties d'air 12, 13 vers l'habitacle d'un véhicule munies de volets d'obturation 14.

Le système 1 comprend un circuit de circulation 21 d'un fluide caloporteur. Ce circuit 21 comprend un premier échangeur de chaleur 19 situé à l'extérieur du compartiment 10, par exemple au niveau de la face avant du véhicule.

Ce premier échangeur de chaleur 19 est relié par une conduite 210 à une première voie 301 d'une vanne cinq voies 30.

La vanne cinq voies 30 comprend une troisième voie 303 qui est reliée via une canalisation 211 à l'entrée d'un compresseur 16. Un accumulateur 29, assurant la fonction d'un séparateur de phases, peut optionnellement être placé entre la troisième voie 303 et le compresseur 16 le long de la conduite 211.

Le compresseur 16 comprend une sortie qui est reliée via une conduite 212 à un troisième échangeur de chaleur 17. Ce troisième échangeur de chaleur 17 est relié via une conduite 213 à une quatrième voie 304 de la vanne cinq voies 30.

Une cinquième voie 305 de la vanne 30 est reliée via une conduite 214 portant une vanne à débit contrôlé 215 à un deuxième changeur de chaleur 15 logé dans le compartiment 10.

Le deuxième changeur de chaleur 15 est relié via une conduite 216 à une deuxième voie 302 de la vanne cinq voies 30.

Le premier échangeur de chaleur 19 est relié à la conduite 214 via une conduite 217 qui débouche entre la cinquième voie 305 et la vanne 215. La conduite 217 porte, en partant du premier échangeur de chaleur 19 en direction de son point de connexion avec la conduite 214, une vanne à débit contrôlé 218, un échangeur interne 31 et une valve unidirectionnelle 219. La valve unidirectionnelle 219 est passante depuis le premier échangeur de chaleur 19 vers le point de raccordement de la conduite 217 à la conduite 214.

Les conduites 216 et 217 sont reliées au moyen d'une conduite 220 débouchant entre l'échangeur interne 31 et la valve unidirectionnelle 219. La conduite 220 porte une valve unidirectionnelle 221. La vanne unidirectionnelle 221 est passante dans le sens allant du point de raccordement des conduites 216 et 220 au point de raccordement des conduites 220 et 217.

Le compartiment 10 loge encore quatrième un échangeur de chaleur 24 situé en aval du deuxième échangeur 15 suivant le sens de circulation de l'air dans le compartiment 10 (cf. flèche I). Le quatrième échangeur 24 est connecté à un circuit de circulation d'eau 27, comprenant une pompe 28, et passant par le troisième échangeur de chaleur 17 à l'intérieur duquel l'eau peut échanger des calories avec le fluide caloporteur circulant dans le circuit 21.

Le compartiment 10 loge enfin un ventilateur 25 pour générer la circulation d'un flux d'air I à l'intérieur de celui-ci, et un volet 26 permettant de shunter l'échangeur de chaleur 24.

Un tel système comprend des moyens de commande 100 pour passer d'un mode de fonctionnement à un autre qui contrôlent notamment les différentes vannes et pompes pour permettre au système de fonctionner au choix selon différents modes dont les principaux vont à présent être décrits. De tels moyens de commande sont connus en soi de l'homme du métier et ne sont pas décrits ici plus en détail. Leur originalité résulte de ce qu'ils sont programmés pour piloter un système ayant une architecture selon l'invention.

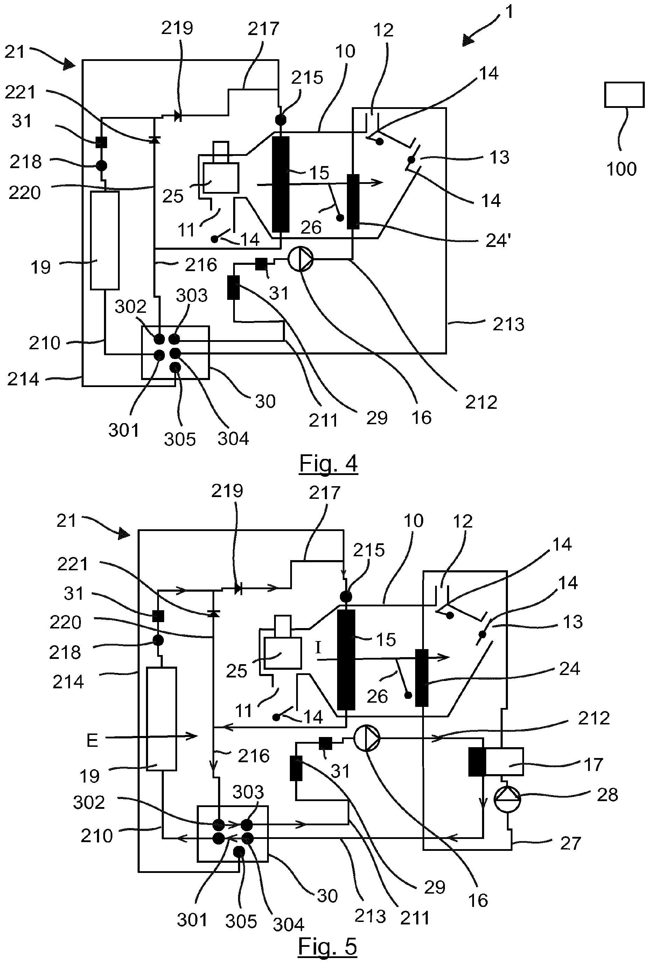

Dans des variantes illustrées aux figures 3 et 4, les échangeurs 17 et 24 sont remplacés par un unique échangeur 24' qui sera logé dans le compartiment 10 en place de l'échangeur 24 et permettra au fluide caloporteur d'échanger de manière directe des calories avec l'air circulant dans le compartiment plutôt que de manière indirecte via le circuit 27.

Dans la variante illustrée à la figure 3, l'échangeur de chaleur 24' est placé sur la conduite 214 entre la cinquième voie 305 et l'échangeur 15 en amont de la vanne 215.

Dans la variante illustrée à la figure 4, l'échangeur de chaleur 24' est placé entre les conduites 212 et 213 entre la sortie du compresseur 16 et la quatrième voie 304.

Dans des variantes non illustrées, le mode de réalisation de la figure 2 pourra être combiné avec celui de la figure 3 ou avec celui de la figure 4. Dans ce cas, le système comprendra deux échangeurs pour transférer des calories à l'air circulant dans le compartiment, l'un fonctionnant directement l'autre fonctionnant indirectement avec un circuit de circulation d'eau 27.

L'échangeur de chaleur 31, dit échangeur interne, est mis en œuvre pour permettre dans certains modes un échange de calories entre le fluide circulant dans la conduite 211 en amont du compresseur 16 et le fluide circulant dans la conduite 217 entre la vanne 218 et la valve 219.

### 6.1.2. Vanne cinq voies

La vanne cinq voies 30 est préférentiellement dissociable du système et constitue ainsi un composant indépendant prêt à être intégré dans un système.

La première 301 et la deuxième 302 voies sont convergentes vers la troisième voie 303. La quatrième 304 voie est divergente vers la cinquième voie 305 et vers la première voie 301.

La vanne cinq voies 30 est configurée pour permettre de mettre en relation :
- l'entrée du compresseur 16 avec la sortie du deuxième échangeur de chaleur 15;
- l'entrée compresseur 16 avec la sortie du premier échangeur de chaleur 19 ;
- la sortie du compresseur 16 avec l'entrée du premier échangeur de chaleur 19 ;
- la sortie du compresseur 16 avec l'entrée du deuxième échangeur de chaleur 15;
au moins un troisième échangeur de chaleur 17, 24' étant interposé entre la vanne cinq voies 30 et la sortie du compresseur 16 et/ou entre la vanne cinq voies 30 et l'entrée du deuxième échangeur de chaleur 15.

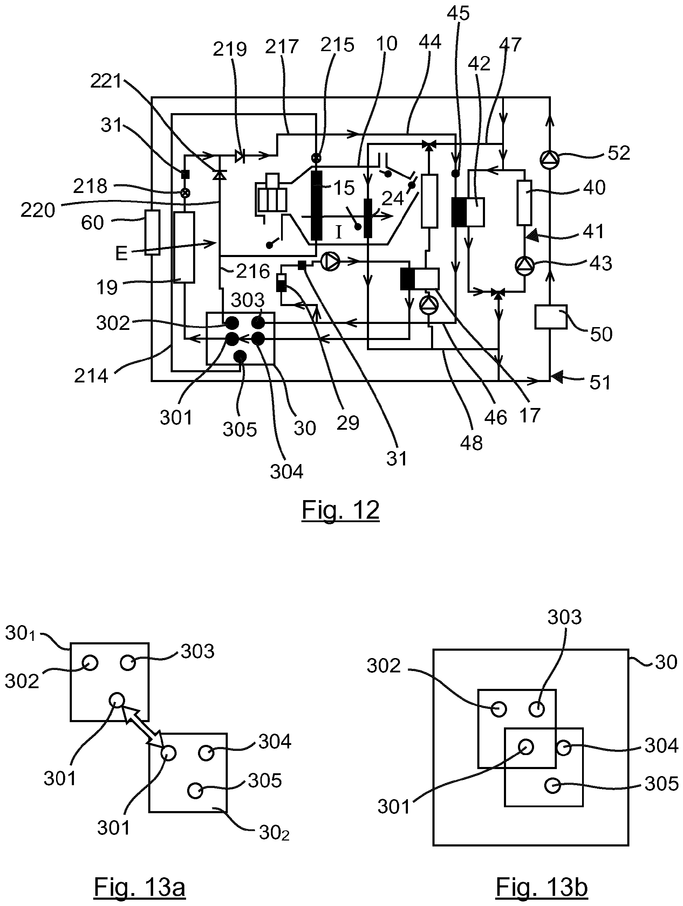

La vanne cinq voies peut être constituée de deux vannes trois voies 30₁, 30₂ interconnectées, tel que cela apparaît sur les figures 13a et 13b.

Dans ce cas, une première vanne trois voies 30₁ comprend les deuxième 302 et troisième 303 voies, et une deuxième vanne trois voies 30₂ comprend les quatrième 304 et cinquième 305 voies, les première et deuxième vannes trois voies comprenant en outre chacune une troisième voie interconnectées entre elles pour former la première voie 301 de la vanne cinq voies 30.

L'une des vannes trois voies est convergente depuis la sortie deuxième échangeur de chaleur 15 et la sortie du premier échangeur de chaleur 19 en direction de l'entrée compresseur 16, l'autre vanne trois voies étant divergente depuis la sortie compresseur 16 vers l'entrée du premier échangeur de chaleur 19 et l'entrée du deuxième échangeur de chaleur 15, les voies des vannes divergente et convergente reliées au premier échangeur de chaleur 19 étant interconnectées.

La vanne cinq voies 30 est à débit contrôlé, c'est-à-dire qu'il est possible de faire varier de manière contrôlée le débit de fluide circulant entre ses voies. Elle peut-être de type tout ou rien, auquel cas la section de passage entre deux voies est soit totalement ouverte soit totalement fermée, ou de type variable, auquel cas il est possible de faire varier la section de passage entre deux voies de manière progressive.

La vanne cinq voies 30 peut prendre une pluralité d'état pour permettre au système de conditionnement d'air de remplir une pluralité de fonctions. Elle peut notamment prendre les cinq états suivants :
- un premier état mettant seulement en relation :
   - la sortie du deuxième échangeur 15 avec l'entrée du compresseur 16 ;
   - la sortie du compresseur 16 avec l'entrée du premier échangeur de chaleur 19, au moins un troisième échangeur de chaleur 17, 24' étant interposé ou non entre la vanne cinq voies 30 et la sortie du compresseur 16.
- Un deuxième état mettant seulement en relation :
   - la sortie du premier échangeur 19 avec l'entrée du compresseur 16 ;
   - la sortie du compresseur 16 avec l'entrée du deuxième échangeur de chaleur 15, au moins un troisième échangeur de chaleur 17, 24' étant interposé ou non entre la vanne cinq voies 30 et la sortie du compresseur 16 et/ou entre la vanne cinq voies 30 et l'entrée du deuxième échangeur de chaleur 15.
- Un troisième état mettant seulement en relation la sortie du compresseur 16 avec l'entrée du deuxième échangeur de chaleur 15, au moins un troisième échangeur de chaleur 17, 24' étant interposé ou non entre la vanne cinq voies 30 et la sortie du compresseur 16 et/ou entre la vanne cinq voies 30 et l'entrée du deuxième échangeur de chaleur 15.
- Un quatrième état mettant seulement en relation :
   - la sortie du deuxième échangeur 15 avec l'entrée du compresseur 16 ;
   - la sortie du compresseur 16 avec l'entrée du deuxième échangeur de chaleur 15, au moins un troisième échangeur de chaleur 17, 24' étant interposé ou non entre la vanne cinq voies 30 et la sortie du compresseur 16 et/ou entre la vanne cinq voies 30 et l'entrée du deuxième échangeur de chaleur 15.
- un cinquième état mettant seulement en relation la sortie du compresseur 16 avec l'entrée du premier échangeur de chaleur 19, au moins un troisième échangeur de chaleur 17, 24' étant interposé ou non entre la vanne cinq voies 30 et la sortie du compresseur 16.

Les états décrits plus haut sont illustratifs et non limitatifs. Un grand nombre d'états est alors possible allant de l'ensemble des voies fermées à l'ensemble des voies ouvertes. Le tableau suivant regroupe les différents états possibles en conservant les caractéristiques de convergence et divergence des voies, le degré d'ouverture en état ouvert pouvant être variable.

| **2^{e} vers 3^{e} voies** | **1^{e} vers 3^{e} voies** | **4^{e} vers 1^{e} voies** | **4^{e} vers 5^{e} voies** |
|---|---|---|---|
| Fermé | Fermé | Fermé | Fermé |
| Fermé | Fermé | Fermé | Ouvert |
| Fermé | Fermé | Ouvert | Fermé |
| Fermé | Fermé | Ouvert | Ouvert |
| Fermé | Ouvert | Fermé | Fermé |
| Fermé | Ouvert | Fermé | Ouvert |
| Fermé | Ouvert | Ouvert | Fermé |
| Fermé | Ouvert | Ouvert | Ouvert |
| Ouvert | Fermé | Fermé | Ouvert |
| Ouvert | Fermé | Ouvert | Fermé |
| Ouvert | Fermé | Ouvert | Ouvert |
| Ouvert | Ouvert | Fermé | Fermé |
| Ouvert | Ouvert | Fermé | Ouvert |
| Ouvert | Ouvert | Ouvert | Fermé |
| Ouvert | Ouvert | Ouvert | Ouvert |

Le sens de circulation entre les voies pourrait être inversé. Il est ainsi possible de faire circuler un fluide, dans un sens ou dans l'autre, entre les première 301 et troisièmes 303 voies, entre les première 301 et quatrième 304 voies, entre les deuxième 302 et troisième 303 voies, entre les quatrième 304 et cinquième 305 voies.

Il est également possible de mettre en communication fluidique les première, deuxième et troisièmes voies, et de mettre en relation fluidique les première, quatrième et cinquième voies.

### 6.2. Mode air conditionné

On présente, en relation avec la figure 5, le fonctionnement en mode air conditionné d'un système de conditionnement d'air selon l'invention.

Dans ce mode de fonctionnement, le fluide caloporteur, amené à circuler dans le circuit 21, est vaporisé dans le deuxième échangeur de chaleur 15, dans lequel il prélève des calories à l'air circulant dans le compartiment 10 afin d'en abaisser la température avant qu'il ne soit diffusé dans l'habitacle. Le fluide caloporteur passe ensuite dans la vanne cinq voies 30 mettant en relation les deuxième 302 et troisième 303 voies pour acheminer le fluide caloporteur le cas échéant dans l'accumulateur 29 puis dans le compresseur 16 où il est comprimé. Le fluide caloporteur passe ensuite dans le troisième échangeur de chaleur 17, qui est inactif, puis dans la vanne cinq voies 30 qui met en relation les quatrième 304 et première 301 voies. Le fluide caloporteur passe ensuite dans le premier échangeur de chaleur 19 assurant la fonction d'un condenseur. Le fluide caloporteur est ensuite détendu dans la vanne 218 ou 215 avant d'être acheminé dans le deuxième échangeur de chaleur 15 pour subir un nouveau cycle. La vanne 218 pourrait exercer une pré-détente si besoin au cas où la température de refoulement du compresseur est haute. On dit alors que l'on contrôle l'efficacité de l'échangeur interne 31 en réduisant l'écart de température maximal entre l'entrée haute pression et l'entrée basse pression de l'échangeur interne 31.

### 6.3. Mode air conditionné et déshumidification

### 6.3.1. Nécessitant une faible puissance de chauffage

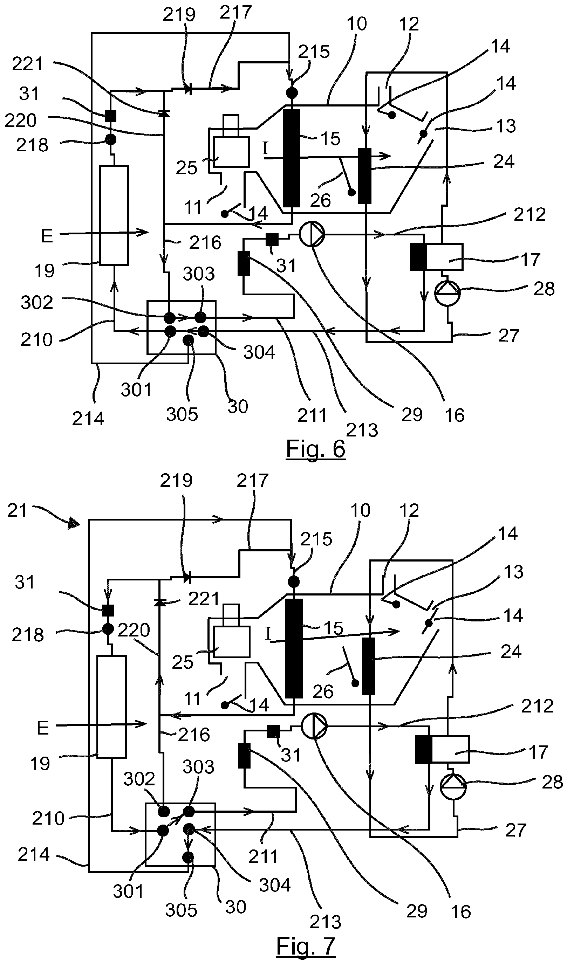

On présente, en relation avec la figure 6, le fonctionnement en mode air conditionné et déshumidification nécessitant une faible puissance de chauffage d'un système de conditionnement d'air selon l'invention.

Dans ce mode de fonctionnement, le fluide caloporteur, amené à circuler dans le circuit 21, est vaporisé dans le deuxième échangeur de chaleur 15, dans lequel il prélève des calories à l'air circulant dans le compartiment 10 afin d'en abaisser la température avant qu'il ne soit diffusé dans l'habitacle. Le fluide caloporteur passe ensuite dans la vanne cinq voies 30 mettant en relation les deuxième 302 et troisième 303 voies pour acheminer le fluide caloporteur le cas échéant dans l'accumulateur 29 puis dans le compresseur 16 où il est comprimé. Le fluide caloporteur passe ensuite dans le troisième échangeur de chaleur 17 à l'intérieur duquel il se condense pour réchauffer l'eau circulant dans le circuit 27. Le fluide passe ensuite dans la vanne cinq voies 30 qui met en relation les quatrième 304 et première 301 voies. Le fluide caloporteur passe ensuite dans le premier échangeur de chaleur 19 assurant la fonction d'un condenseur. Le fluide caloporteur est ensuite détendu dans la vanne 218 et/ou 215 avant d'être acheminé dans le deuxième échangeur de chaleur 15 pour subir un nouveau cycle.

La circulation de l'eau dans le circuit 27 permet de réchauffer l'air circulant dans le compartiment 10 via l'échangeur de chaleur 24.

### 6.3.2. Nécessitant une forte puissance de chauffage

On présente, en relation avec la figure 7, le fonctionnement en mode air conditionné et déshumidification nécessitant une forte puissance de chauffage d'un système de conditionnement d'air selon l'invention.

Dans ce mode de fonctionnement, le fluide caloporteur, amené à circuler dans le circuit 21, est vaporisé dans le deuxième échangeur de chaleur 15, dans lequel il prélève des calories à l'air I circulant dans le compartiment 10 afin d'en abaisser la température avant qu'il ne soit diffusé dans l'habitacle. Le fluide caloporteur passe ensuite dans les conduites 216 et 220, passe à travers la valve unidirectionnelle 221 puis traverse le premier échangeur de chaleur 19 dans lequel il est vaporisé. Le fluide caloporteur passe ensuite dans la vanne cinq voies 30 qui met en relation les première 301 et troisième 303 voies pour acheminer le fluide caloporteur le cas échéant dans l'accumulateur 29 puis dans le compresseur 16 où il est comprimé. Le fluide caloporteur passe ensuite dans le troisième échangeur de chaleur 17 à l'intérieur duquel il se condense pour réchauffer l'eau circulant dans le circuit 27. Le fluide passe ensuite dans la vanne cinq voies 30 qui met en relation les quatrième 304 et cinquième 305 voies. Le fluide caloporteur passe ensuite dans la conduite 214, dans la vanne 215 assurant la fonction de détendeur puis dans le deuxième échangeur de chaleur 15 pour subir un nouveau cycle.

La circulation de l'eau dans le circuit 27 permet de réchauffer l'air circulant dans le compartiment 10 via l'échangeur de chaleur 24.

### 6.3. Mode chauffage

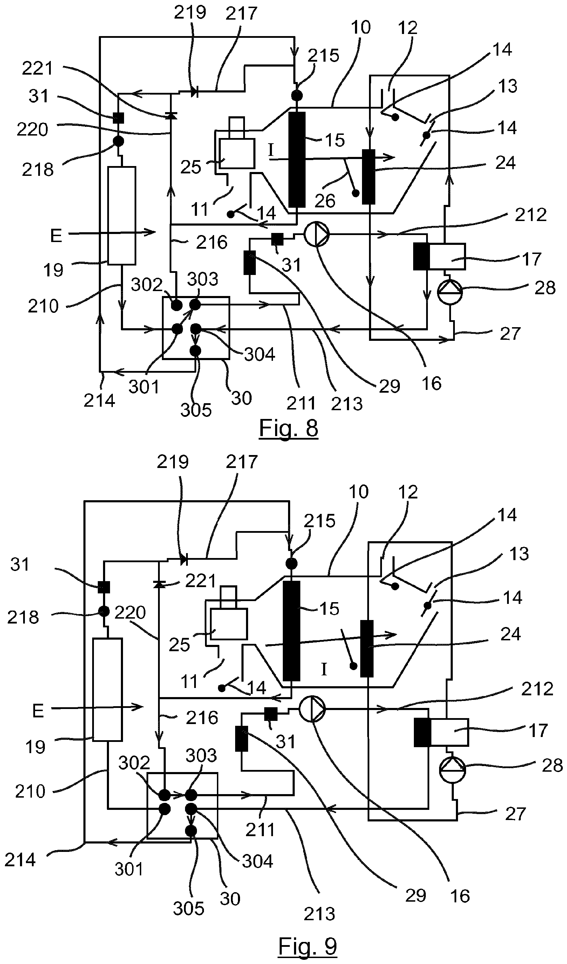

On présente, en relation avec la figure 8, le fonctionnement en mode chauffage d'un système de conditionnement d'air selon l'invention.

Dans ce mode de fonctionnement, le fluide caloporteur est réchauffé par l'air ambiant E à l'intérieur du premier échangeur de chaleur 19 dans lequel il se vaporise. Il passe ensuite dans la vanne cinq voies 30 qui met en relation les première 301 et troisième 303 voies pour acheminer le fluide caloporteur le cas échéant à travers l'accumulateur 29 puis dans le compresseur 16 afin de le comprimer. Le fluide caloporteur passe ensuite dans le troisième échangeur de chaleur 17 dans lequel il est condensé pour réchauffer l'eau circulant dans le circuit 27. Le fluide caloporteur passe ensuite dans la vanne cinq voies 30 qui met en relation les quatrième 304 et cinquième 305 voies. Le fluide caloporteur s'écoule ensuite dans la conduite 214 en direction du troisième échangeur de chaleur 15 dans lequel il continu de se condenser pour préchauffer l'air circulant dans le compartiment 10. Le fluide s'écoule ensuite dans les conduites 216 puis 220 en passant à travers la valve unidirectionnelle 221. Il est ensuite détendu dans la vanne 218 avant d'être acheminé dans le premier échangeur de chaleur 19 pour subir un nouveau cycle.

La circulation de l'eau dans le circuit 27 permet de réchauffer l'air circulant dans le compartiment 10 via l'échangeur de chaleur 24.

### 6.4. Mode récupération de la chaleur de la cabine

On présente, en relation avec la figure 9, le fonctionnement en mode récupération d'un système de conditionnement d'air selon l'invention.

Dans ce mode de fonctionnement, le fluide caloporteur est vaporisé dans l'évaporateur 15. Le fluide caloporteur passe ensuite dans la vanne cinq voies 30 qui met en relation les deuxième 302 et troisième 303 voies pour amener le fluide caloporteur le cas échéant dans l'accumulateur 29 puis dans le compresseur 16 où il est comprimé. Le fluide caloporteur passe ensuite dans l'échangeur de chaleur 17 dans lequel il se condense pour réchauffer l'eau circulant dans le circuit 27 avant de passer dans la vanne cinq voies 30 qui met en relation les quatrième 304 et cinquième 305 voies. Le fluide caloporteur emprunte la conduite 214 puis est détendu dans la vanne 215 avant d'être réintroduit dans l'échangeur de chaleur 15 pour subir un nouveau cycle.

La circulation de l'eau dans le circuit 27 permet de réchauffer l'air circulant dans le compartiment 10 via l'échangeur de chaleur 24.

La capacité de refroidissement de l'échangeur 15 est plus faible que la capacité de chauffage de l'échangeur 24.

### 6.5. Variantes

### 6.5.1. Architectures

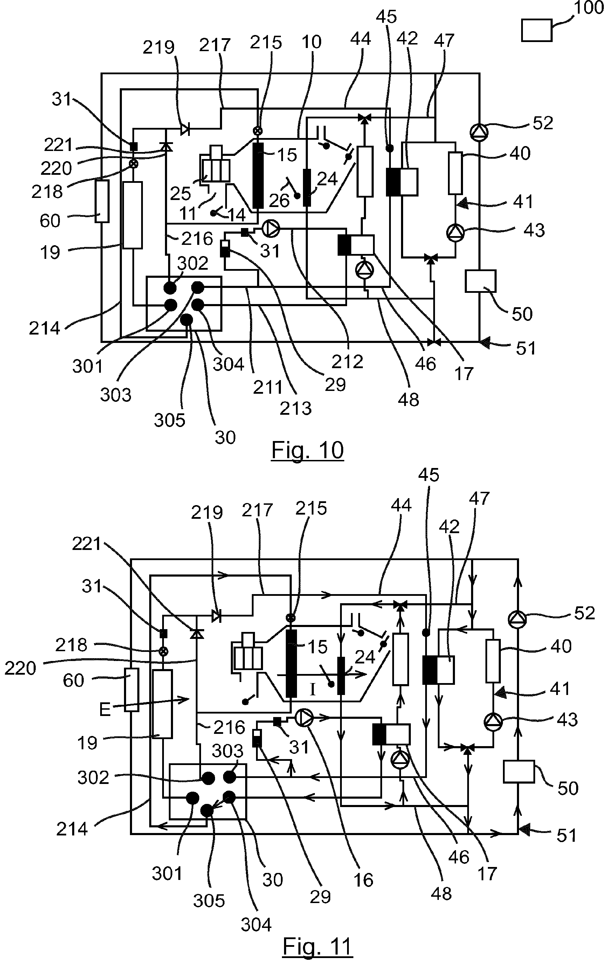

Un système selon l'invention peut être mis en œuvre au sein d'un système plus complexe permettant par exemple d'assurer la gestion de la thermique d'un véhicule notamment électrique. Il peut par exemple être mis au sein d'un système tel que celui illustré à la figure 10.

Un tel système comprend, outre l'architecture selon l'une ou l'autre des variantes des figures 2 à 4 ou de leur combinaison, des moyens d'échange de calories avec la batterie d'un véhicule et/ou avec le moteur de celui-ci.

De tels moyens d'échange de calories avec la batterie 40 comprennent par exemple un circuit 41 mettant en série la batterie 40 avec un échangeur de chaleur 42 et une pompe 43. L'échangeur de chaleur 42 est par ailleurs en circulation fluidique avec le circuit de circulation de fluide caloporteur 21. Pour cela, il est relié d'une part au moyen d'une conduite 44 portant une vanne à débit contrôlé 45 aux conduites 214 et 217, et d'autre part via une conduite 46 à la conduite 211. Le circuit 41 est en communication fluidique avec le circuit 27 au moyen de conduites 47, 48.

De tels moyens d'échange de calories avec le moteur 50 comprennent par exemple un circuit 51 mettant en série le moteur 50 et une pompe 52, lequel circuit 51 étant monté en parallèle du circuit 41 avec lequel il est en communication fluidique.

Un tel système comprend encore un échangeur de chaleur frontal 60, placé au niveau de la face avant du véhicule, et monté sur un circuit 61 en parallèle des circuits 41 et 51 et en communication fluidique avec eux.

### 6.5.2. Mode chauffage et récupération de la chaleur de la chaîne de transmission

On présente, en relation avec la figure 11, le fonctionnement en mode récupération de la chaleur de la chaîne de transmission d'un système de conditionnement d'air selon l'invention.

Dans ce mode de fonctionnement, la pompe 52 est mise en œuvre pour faire circuler un fluide caloporteur dans le circuit 51 et en partie dans le circuit 41 (la pompe 43 étant inactive) pour lui permettre de prélever des calories au moteur 50 et de les échanger avec le fluide caloporteur circulant dans le circuit 21 via l'échangeur 42 dans lequel ce fluide se vaporise. Le fluide caloporteur vaporisé dans l'échangeur 42 est acheminé le cas échéant dans l'accumulateur 29 puis dans le compresseur 16 à l'intérieur duquel il est comprimé. Il est ensuite condensé dans l'échangeur de chaleur 17 dans lequel il cède des calories à l'eau circulant dans le circuit 27. Le fluide caloporteur est acheminé dans la vanne cinq voies 30 qui met en communication les quatrième 304 et cinquième voies 305. Il est alors acheminé via les conduites 214 et 44 dans la vanne 45 dans laquelle il se détend avant de retourner dans l'échangeur de chaleur 42 pour subir un nouveau cycle.

La circulation de l'eau dans le circuit 27 permet de réchauffer l'air circulant dans le compartiment 10 via l'échangeur de chaleur 24.

### 6.5.3. Mode dégivrage à l'arrêt

On présente, en relation avec la figure 12, le fonctionnement en mode dégivrage à l'arrêt d'un système de conditionnement d'air selon l'invention.

Dans ce mode de fonctionnement, la pompe 52 est mise en œuvre pour faire circuler un fluide caloporteur dans le circuit 51 et en partie dans le circuit 41 (la pompe 43 étant inactive) pour lui permettre de prélever des calories au moteur 50 et de les échanger avec le fluide caloporteur circulant dans le circuit 21 via l'échangeur 42 dans lequel celui-ci se vaporise. Le fluide caloporteur vaporisé dans l'échangeur 42 est acheminé le cas échéant dans l'accumulateur 29 puis dans le compresseur 16 à l'intérieur duquel il est comprimé. Il est ensuite condensé dans l'échangeur de chaleur 17 dans lequel il cède des calories non pas à l'eau circulant dans le circuit 27 mais au fluide circulant dans l'échangeur de chaleur 42. Le fluide caloporteur est acheminé dans la vanne cinq voies 30 qui met en communication les quatrième 304 et première voies 301. Il est alors acheminé dans le premier échangeur de chaleur 19 dans lequel il se condense pour en assurer le dégivrage avant d'être détendu dans la vanne 218 ou 45 puis d'être réintroduit dans l'échangeur de chaleur 47 pour subir un nouveau cycle.

### 6.5.4. Fonctions

Un système selon l'invention peut bien entendu être mis en œuvre pour réaliser de nombreuses autres fonctions que celles décrites plus à titre d'exemples pour illustrer les principaux états pouvant être pris par la vanne cinq voies.

### 6.6. Divers

Dans chacun des modes, les différentes vannes sont contrôlées en fonction des besoins et de la température ambiante et de celle demandée dans l'habitacle.

Le sens de circulation du fluide dans le premier échangeur 19 peut être inversé selon les modes. Celui-ci peut fonctionner en évaporateur ou en condenseur.

Le deuxième échangeur de chaleur 15 peut fonctionner en évaporateur ou en condenseur (pré-chauffage) selon les modes.

La vanne cinq voies permet notamment :
- de fusionner différentes vannes dans une seule vanne intelligente : un seul composant pour une simplification de l'architecture ;
- de conserver un grand nombre de fonctionnalités ;
- améliorer le contrôle de l'efficacité de l'échangeur interne 31 ;
- profiter de l'utilisation des vannes expansion étanches bidirectionnelles ;
- compatible avec l'utilisation de réfrigérant chimique (R134a, R1234yf...) ;
- compatible avec une pompe à chaleur directe ou indirecte ;
- utilisation d'un condenseur à eau (le troisième échangeur de chaleur 17) utilisé à la fois en mode air conditionné et chauffage afin de permettre de protéger la vanne située en amont de l'échangeur 17 du système de l'art antérieur illustré à la figure 1 contre une température très élevée du fluide caloporteur.

## Revendications

1. Système de conditionnement d'air (1) dans un compartiment (10) d'un véhicule, ledit système (1) comprenant au moins :
- un premier échangeur de chaleur (19) situé à l'extérieur dudit compartiment (10) ;
- un deuxième échangeur de chaleur (15) situé à l'intérieur dudit compartiment (10) et apte à prélever ou transférer des calories à l'air circulant dans ledit compartiment (10) ;
- au moins un troisième échangeur de chaleur (17, 24') apte à transférer des calories à l'air circulant dans ledit compartiment (10) ;
- un compresseur (16) ;
- un circuit (21) de circulation d'un fluide caloporteur ;
**caractérisé en ce que** ledit circuit comprend une vanne cinq voies (30) configurée pour permettre de mettre en relation :
- l'entrée dudit compresseur (16) avec la sortie dudit deuxième échangeur de chaleur (15) ;
- l'entrée dudit compresseur (16) avec la sortie dudit premier échangeur de chaleur (19) ;
- la sortie dudit compresseur (16) avec l'entrée dudit premier échangeur de chaleur (19) ;
- la sortie dudit compresseur (16) avec l'entrée dudit deuxième échangeur de chaleur (15) ; ledit au moins un troisième échangeur de chaleur (17, 24') étant interposé entre ladite vanne cinq voies (30) et la sortie dudit compresseur (16) et/ou entre ladite vanne cinq voies (30) et l'entrée dudit deuxième échangeur de chaleur (15).

2. Système selon la revendication 1 dans lequel ladite vanne cinq voies (30) comprend deux vannes trois voies (30₁ ,30₂) interconnectées.

3. Système selon la revendication 2 dans lequel l'une desdites vannes trois voies (30₁) est convergente depuis la sortie dudit deuxième échangeur de chaleur (15) et la sortie dudit premier échangeur de chaleur (19) en direction de l'entrée dudit compresseur (16), l'autre vanne trois voies (30₂) étant divergente depuis la sortie dudit compresseur (16) vers l'entrée dudit premier échangeur de chaleur (19) et l'entrée dudit deuxième échangeur de chaleur (15), les voies des vannes divergente (30₂) et convergente (30₁) reliées audit premier échangeur de chaleur (19) étant interconnectées.

4. Système selon l'une quelconque des revendications 1 à 3 dans lequel ladite vanne cinq voies (30) est à débit contrôlé de type tout ou rien ou de type variable.

5. Système selon l'une quelconque des revendications 1 à 4 dans lequel ladite vanne cinq voies (30) se trouve dans un premier état mettant seulement en relation :
- la sortie dudit deuxième échangeur (15) avec l'entrée dudit compresseur (16) ;
- la sortie dudit compresseur (16) avec l'entrée dudit premier échangeur de chaleur (19), ledit au moins un troisième échangeur de chaleur (17, 24') étant interposé ou non entre ladite vanne cinq voies (30) et la sortie dudit compresseur (16).

6. Système selon l'une quelconque des revendications 1 à 4 dans lequel ladite vanne cinq voies (30) se trouve dans un deuxième état mettant seulement en relation :
- la sortie dudit premier échangeur (19) avec l'entrée dudit compresseur (16) ;
- la sortie dudit compresseur (16) avec l'entrée dudit deuxième échangeur de chaleur (15), ledit au moins un troisième échangeur de chaleur (17, 24') étant interposé ou non entre ladite vanne cinq voies (30) et la sortie dudit compresseur (16) et/ou entre ladite vanne cinq voies (30) et l'entrée dudit deuxième échangeur de chaleur (19).

7. Système selon l'une quelconque des revendications 1 à 4 dans lequel ladite vanne cinq voies (30) se trouve dans un troisième état mettant seulement en relation la sortie dudit compresseur (16) avec l'entrée dudit deuxième échangeur de chaleur (15), ledit au moins un troisième échangeur de chaleur (17, 24') étant interposé ou non entre ladite vanne cinq voies (30) et la sortie dudit compresseur (16) et/ou entre ladite vanne cinq voies (30) et l'entrée dudit deuxième échangeur de chaleur (15).

8. Système selon l'une quelconque des revendications 1 à 4 dans lequel ladite vanne cinq voies (30) se trouve dans un quatrième état mettant seulement en relation :
- la sortie dudit deuxième échangeur (15) avec l'entrée dudit compresseur (16) ;
- la sortie dudit compresseur (16) avec l'entrée dudit deuxième échangeur de chaleur (15), ledit au moins un troisième échangeur de chaleur (17, 24') étant interposé ou non entre ladite vanne cinq voies (30) et la sortie dudit compresseur (16) et/ou entre ladite vanne cinq voies (30) et l'entrée dudit deuxième échangeur de chaleur (15).

9. Système selon l'une quelconque des revendications 1 à 4 dans lequel ladite vanne cinq voies (30) se trouve dans un cinquième état mettant seulement en relation la sortie dudit compresseur (16) avec l'entrée dudit premier échangeur de chaleur (19), ledit au moins un troisième échangeur de chaleur (17, 24') étant interposé ou non entre ladite vanne cinq voies (30) et la sortie dudit compresseur (16).

## Patentansprüche

1. Klimatisierungssystem (1) in einem Abteil (10) eines Fahrzeugs, wobei das System (1) mindestens enthält:
- einen ersten Wärmetauscher (19), der sich außerhalb des Abteils (10) befindet;
- einen zweiten Wärmetauscher (15), der sich innerhalb des Abteils (10) befindet und der aus der im Abteil (10) strömenden Luft Kalorien entnehmen oder zu ihr übertragen kann;
- mindestens einen dritten Wärmetauscher (17, 24'), der zu der im Abteil (10) strömenden Luft Kalorien übertragen kann;
- einen Kompressor (16);
- einen Strömungskreislauf (21) eines Wärmeträgermediums;
**dadurch gekennzeichnet, dass** der Kreislauf ein Fünfwegeventil (30) enthält, das konfiguriert ist, es zu ermöglichen, miteinander zu verknüpfen:
- den Eingang des Kompressors (16) mit dem Ausgang des zweiten Wärmetauschers (15);
- den Eingang des Kompressors (16) mit dem Ausgang des ersten Wärmetauschers (19);
- den Ausgang des Kompressors (16) mit dem Eingang des ersten Wärmetauschers (19);
- den Ausgang des Kompressors (16) mit dem Eingang des zweiten Wärmetauschers (15);
wobei der mindestens eine dritte Wärmetauscher (17, 24') zwischen dem Fünfwegeventil (30) und dem Ausgang des Kompressors (16) und/oder zwischen dem Fünfwegeventil (30) und dem Eingang des zweiten Wärmetauschers (15) eingefügt ist.

2. System nach Anspruch 1, wobei das Fünfwegeventil (30) zwei miteinander verbundene Dreiwegeventile (30₁, 30₂) enthält.

3. System nach Anspruch 2, wobei eines der Dreiwegeventile (30₁) vom Ausgang des zweiten Wärmetauschers (15) und vom Ausgang des ersten Wärmetauschers (19) in Richtung des Eingangs des Kompressors (16) konvergent ist, wobei das andere Dreiwegeventil (30₂) vom Ausgang des Kompressors (16) zum Eingang des ersten Wärmetauschers (19) und zum Eingang des zweiten Wärmetauschers (15) divergent ist, wobei die Wege des divergenten (30₂) und konvergenten (30₁) Ventils, die mit dem ersten Wärmetauscher (19) verbunden sind, miteinander verbunden sind.

4. System nach einem der Ansprüche 1 bis 3, wobei das Fünfwegeventil (30) mit kontrolliertem Durchsatz von der Art Ein-Aus oder von variablem Typ ist.

5. System nach einem der Ansprüche 1 bis 4, wobei das Fünfwegeventil (30) sich in einem ersten Zustand befindet, der nur verknüpft:
- den Ausgang des zweiten Tauschers (15) mit dem Eingang des Kompressors (16);
- den Ausgang des Kompressors (16) mit dem Eingang des ersten Wärmetauschers (19), wobei der mindestens eine dritte Wärmetauscher (17, 24') zwischen dem Fünfwegeventil (30) und dem Ausgang des Kompressors (16) eingefügt ist oder nicht.

6. System nach einem der Ansprüche 1 bis 4, wobei das Fünfwegeventil (30) sich in einem zweiten Zustand befindet, der nur verknüpft:
- den Ausgang des ersten Tauschers (19) mit dem Eingang des Kompressors (16);
- den Ausgang des Kompressors (16) mit dem Eingang des zweiten Wärmetauschers (15), wobei der mindestens eine dritte Wärmetauscher (17, 24') zwischen dem Fünfwegeventil (30) und dem Ausgang des Kompressors (16) und/oder zwischen dem Fünfwegeventil (30) und dem Eingang des zweiten Wärmetauschers (19) eingefügt ist oder nicht.

7. System nach einem der Ansprüche 1 bis 4, wobei das Fünfwegeventil (30) sich in einem dritten Zustand befindet, der nur den Ausgang des Kompressors (16) mit dem Eingang des zweiten Wärmetauscher (15) verknüpft, wobei der mindestens eine dritte Wärmetauscher (17, 24') zwischen dem Fünfwegeventil (30) und dem Ausgang des Kompressors (16) und/oder zwischen dem Fünfwegeventil (30) und den Eingang des zweiten Wärmetauschers (15) eingefügt ist oder nicht.

8. System nach einem der Ansprüche 1 bis 4, wobei das Fünfwegeventil (30) sich in einem vierten Zustand befindet, der nur miteinander verknüpft:
- den Ausgang des zweiten Tauschers (15) mit dem Eingang des Kompressors (16);
- den Ausgang des Kompressors (16) mit dem Eingang des zweiten Wärmetauschers (15), wobei der mindestens eine dritte Wärmetauscher (17, 24') zwischen dem Fünfwegeventil (30) und dem Ausgang des Kompressors (16) und/oder zwischen dem Fünfwegeventil (30) und dem Eingang des zweiten Wärmetauschers (15) eingefügt ist oder nicht.

9. System nach einem der Ansprüche 1 bis 4, wobei das Fünfwegeventil (30) sich in einem fünften Zustand befindet, der nur den Ausgang des Kompressors (16) mit dem Eingang des ersten Wärmetauschers (19) verknüpft, wobei der mindestens eine dritte Wärmetauscher (17, 24') zwischen dem Fünfwegeventil (30) und dem Ausgang des Kompressors (16) eingefügt ist oder nicht.

## Claims

1. System (1) for air conditioning in a compartment (10) of a vehicle, the said system (1) comprising at least:
- a first heat exchanger (19) situated outside the said compartment (10);
- a second heat exchanger (15) situated inside the said compartment (10) and able to collect heat energy from or transfer heat energy to the air circulating in the said compartment (10);
- at least a third heat exchanger (17, 24') able to transfer heat energy to the air circulating in the said compartment (10);
- a compressor (16);
- a circuit (21) for circulating a heat-transfer fluid;
**characterized in that** the said circuit comprises a five-way valve (30) configured to allow connection between:
- the inlet of the said compressor (16) and the outlet of the said second heat exchanger (15);
- the inlet of the said compressor (16) and the outlet of the said first heat exchanger (19);
- the outlet of the said compressor (16) and the inlet of the said first heat exchanger (19);
- the outlet of the said compressor (16) and the inlet of the said second heat exchanger (15);
the said at least one third heat exchanger (17, 24') being interposed between the said five-way valve (30) and the outlet of the said compressor (16) and/or between the said five-way valve (30) and the inlet of the said second heat exchanger (15).

2. System according to Claim 1, wherein the said five-way valve (30) comprises two interconnected three-way valves (30₁, 30₂) .

3. System according to Claim 2, wherein one of the said three-way valves (30₁) is convergent from the outlet of the said second heat exchanger (15) and the outlet of the said first heat exchanger (19) towards the inlet of the said compressor (16), the other three-way valve (30₂) being divergent from the outlet of the said compressor (16) towards the inlet of the said first heat exchanger (19) and the inlet of the said second heat exchanger (15), the ports of the divergent valve (30₂) and convergent valve (30₁) that are connected to the said first heat exchanger (19) being interconnected.

4. System according to any one of Claims 1 to 3, wherein the said five-way valve (30) is a controlled-flow rate valve of the on/off type or of the variable type.

5. System according to any one of Claims 1 to 4, wherein the said five-way valve (30) has a first status providing connection only between:
- the outlet of the said second exchanger (15) and the inlet of the said compressor (16);
- the outlet of the said compressor (16) and the inlet of the said first heat exchanger (19), the said at least one third heat exchanger (17, 24') either being or not being interposed between the said five-way valve (30) and the outlet of the said compressor (16).

6. System according to any one of Claims 1 to 4, wherein the said five-way valve (30) has a second status providing connection only between:
- the outlet of the said first exchanger (19) and the inlet of the said compressor (16);
- the outlet of the said compressor (16) and the inlet of the said second heat exchanger (15), the said at least one third heat exchanger (17, 24') either being or not being interposed between the said five-way valve (30) and the outlet of the said compressor (16) and/or between the said five-way valve (30) and the inlet of the said second heat exchanger (19).

7. System according to any one of Claims 1 to 4, wherein the said five-way valve (30) has a third status providing connection only between the outlet of the said compressor (16) and the inlet of the said second heat exchanger (15), the said at least one third heat exchanger (17, 24') being or not being interposed between the said five-way valve (30) and the outlet of the said compressor (16) and/or between the said five-way valve (30) and the inlet of the said second heat exchanger (15).

8. System according to any one of Claims 1 to 4, wherein the said five-way valve (30) has a fourth status providing connection only between:
- the outlet of the said second exchanger (15) and the inlet of the said compressor (16);
- the outlet of the said compressor (16) and the inlet of the said second heat exchanger (15), the said at least one third heat exchanger (17, 24') being or not being interposed between the said five-way valve (30) and the outlet of the said compressor (16) and/or between the said five-way valve (30) and the inlet of the said second heat exchanger (15).

9. System according to any one of Claims 1 to 4, wherein the said five-way valve (30) has a fifth status providing connection only between the outlet of the said compressor (16) and the inlet of the said first heat exchanger (19), the said at least one third heat exchanger (17, 24') being or not being interposed between the said five-way valve (30) and the outlet of the said compressor (16).
